# FASCICULE DE BREVET EUROPEEN

(11) **EP 1 494 912 B1**
(45) Date de publication et mention de la délivrance du brevet: **15.03.2006**
(21) Numéro de dépôt: 03746326.2
(22) Date de dépôt: 09.04.2003
(51) Int. Cl.: B62D 65/00, B60G 11/23, B60G 11/24, B60G 7/02, F16F 1/38, F16F 1/50

(54) **DISPOSITIF DE SUSPENSION DE VEHICULE COMPRENANT UNE ARTICULATION ELASTIQUE AVEC ELEMENTS DE BRIDAGE**
EINE ELASTISCHE VERBINDUNG MIT KLEMMELEMENTEN UMFASSENDE FAHRZEUGAUFHÄNGUNGSVORRICHTUNG
VEHICLE SUSPENSION DEVICE COMPRISING AN ELASTIC JOINT WITH CLAMPING ELEMENTS

(30) Priorité: 18.04.2002 FR 0204870
(43) Date de publication de la demande: 12.01.2005
(73) Titulaire: VALLOUREC COMPOSANTS AUTOMOBILES VITRY, 51300 Vitry le Francois (FR)
(72) Inventeur: MINGUET, Denis, F-51300 Vitry-le-François (FR); DELETOMBE, Philippe, F-51000 Châlon-en-Champagne (FR)
(74) Mandataire: Plaçais, Jean Yves
(86) Numéro de dépôt international: PCT/FR2003/001121
(87) Numéro de publication internationale: WO 2003/086843

(56) Documents cités:
- EP-A- 1 090 783
- DE-C- 713 104
- DE-C- 923 114
- FR-A- 2 812 242
- GB-A- 554 695
- US-A- 4 537 420
- US-A- 5 641 175

## Description

L'invention concerne des essieux pour véhicule automobile comprenant des dispositifs de suspension comportant une articulation élastique élastomère.

Les articulations élastiques élastomère peuvent permettre d'assurer la fonction de "ressort" entre la caisse du véhicule et la roue. Il est notamment connu par le document EP 0 956 954 que ces articulations élastiques élastomère peuvent contribuer substantiellement sinon totalement à la reprise de la charge de la caisse du véhicule en assurant une fonction de ressort de suspension sollicité en torsion. Le document EP 1 090 783 propose de résoudre des problèmes liés à de telles articulations élastiques et notamment de limiter les dérives de hauteur de caisse dues à la sollicitation en torsion de l'articulation élastique élastomère. Pour cela, EP 1 090 783 propose un procédé de stabilisation des caractéristiques mécaniques de fonctionnement d'une articulation élastique élastomère en soumettant cette articulation à une déformation maximale correspondant à une déformation limite de compression maximale lorsque l'articulation est mise en place sur le véhicule. Ainsi, ces articulations élastiques élastomère ont besoin, pour assurer une bonne tenue de leurs caractéristiques dans le temps, de subir une opération de parachèvement dit encore de stabilisation avant montage sur le véhicule.

Jusqu'ici, le procédé de parachèvement permettant de pré-contraindre en torsion l'articulation élastique élastomère était principalement effectué une fois l'articulation intégrée à l'ensemble des pièces formant l'essieu avant montage sur le véhicule. Il est toutefois préférable d'appliquer une contrainte de torsion de stabilisation sur l'articulation élastique élastomère avant de l'intégrer aux éléments formant l'essieu, notamment pour des raisons de stockage et de coût d'opération. D'autre part, une fois montée sur le véhicule, une articulation élastique élastomère soumise à une contrainte de torsion par élément de bridage nécessite une intervention particulière pour l'extraction des éléments de bridage.

L'invention vient améliorer cette situation.

D'autre part, après le montage de l'essieu d'un côté sur la caisse du véhicule et de l'autre sur la roue, il apparaît souvent une variation inacceptable de hauteur effective de caisse de véhicule par rapport à une hauteur nominale due à la variation d'une part de la masse du véhicule et d'autre part des caractéristiques, notamment de raideur, du matériau élastomère en fonction des lots d'où provient ce matériau.

L'invention vient également proposer une solution aboutissant à un réglage fin de la hauteur de caisse du véhicule.

L'invention concerne une articulation élastique élastomère adaptée pour servir de pièce ressort d'un dispositif de suspension de véhicule. Ladite articulation définit un axe de rotation Y et comprend une armature interne et une armature externe reliées par un matériau élastique élastomère destiné à être soumis à une contrainte de torsion autour de l'axe Y avant montage sur le véhicule.

Selon une première caractéristique de l'invention, l'articulation élastique comprend un dispositif de bridage entre l'armature externe et l'armature interne. L'armature externe comprend une butée saillant vers l'extérieur, le dispositif de bridage et la butée étant propres, après la soumission du matériau élastique élastomère à une contrainte de torsion dite de stabilisation, à venir en appui mutuel sous la contrainte de rappel, de manière à maintenir la contrainte de torsion sur le matériau élastique élastomère.

Dans une réalisation selon l'invention, le dispositif de bridage comprend un élément de bridage d'un côté fixé à l'armature interne et de l'autre côté libre et propre à venir en appui contre la butée sous la contrainte de rappel.

Avantageusement, le dispositif de bridage comprend un élément de bridage selon un profil en U comprenant deux montants fixés chacun à l'armature interne et une traverse reliant les deux montants propre à venir en appui contre la butée sous la contrainte de rappel.

Dans une autre réalisation selon l'invention, l'articulation élastique comprend, fixée à l'armature interne, une chape de fixation de l'articulation élastique élastomère au véhicule comportant, sur un côté parallèle à l'axe de rotation Y, une concavité dirigée vers l'armature externe. Selon un aspect de l'invention, le dispositif de bridage entre l'armature externe et l'armature interne comprend une plaque de bridage propre à venir en appui d'un côté contre la butée de l'armature externe et de l'autre côté dans la concavité de la chape de fixation sous la contrainte de rappel.

Dans une réalisation avantageuse de l'invention, l'articulation élastique comprend, fixée à l'armature interne, une chape de fixation de l'articulation élastique élastomère au véhicule comportant, sur un côté parallèle à l'axe de rotation Y, une élément formant accroche dirigé vers l'armature externe. Selon un aspect de l'invention, le dispositif de bridage entre l'armature externe et l'armature interne comprend une plaque de bridage en forme générale de S propre à venir en appui d'un côté contre la butée de l'armature externe et de l'autre côté contre l'élément formant accroche sous la contrainte de rappel.

Dans une réalisation particulière de l'invention, l'articulation élastique comprend une chape de fixation de l'articulation élastique élastomère au véhicule comportant une encoche sur au moins un de ses bords perpendiculaire à l'axe Y, l'encoche étant placée de manière à venir en regard de la butée de l'armature externe lors de la mise sous contrainte du matériau élastomère. Selon un aspect de l'invention, le dispositif de bridage entre l'armature externe et l'armature interne comprend un élément propre à s'engager dans l'encoche et à y être maintenu sous la poussée de la butée provoquée par la contrainte de rappel.

Selon un aspect de l'invention, le dispositif de bridage et l'armature externe sont agencés pour permettre la libération automatique du dipositif de bridage lorsque l'articulation élastique est soumise, après montage sur le véhicule, à une contrainte de torsion au moins égal en valeur absolue et en signe à la contrainte de torsion de stabilisation.

Selon un aspect complémentaire de l'invention, l'articulation élastique est destinée à être montée sur le véhicule de manière à ce que la libération automatique du dispositif de bridage s'opère par gravité.

Dans une des réalisations de l'invention, les montants de l'élément de bridage sont fixés à l'armature interne par coopération dans des trous de l'armature interne et en ce que l'articulation élastique est destinée à être montée sur le véhicule de manière à ce que le centre de gravité de l'élément de bridage soit situé sensiblement à la verticale des trous sous ces trous.

Dans une autre des réalisations de l'invention, l'armature externe comprend une came décalée circonférentiellement par rapport à la butée pour que la libération automatique de la plaque de bridage soit assurée par la poussée de la came sur l'extrémité de la plaque de bridage initialement en appui contre la butée.

D'autre part, l'articulation élastique élastomère est adaptée pour être fixée d'une part, par l'intermédiaire de l'armature externe, à un bras longitudinal oscillant relié à l'axe d'une roue de véhicule et d'autre part, par l'intermédiaire de l'armature interne, à la caisse du véhicule et pour opposer une force de rappel en torsion lors de la soumission à une contrainte de torsion de stabilisation selon l'axe Y.

Selon un autre aspect de l'invention, l'armature externe comprend des moyens de réglage angulaire de l'articulation par rapport au bras longitudinal oscillant.

Avantageusement, les moyens de réglage angulaire s'étendent radialement à partir de la périphérie de l'armature externe.

Dans une réalisation avantageuse de l'invention, les moyens de réglage angulaire comprennent au moins un trou oblong en forme d'arc de cercle centré sur l'axe Y propre à être mis en vis à vis avec un trou du bras longitudinal oscillant pour fixer l'articulation au bras longitudinal oscillant.

Dans une autre réalisation avantageuse de l'invention, les moyens de réglage angulaire comprennent au moins un trou oblong à crans en forme d'arc de cercle centré sur l'axe Y.

Préférentiellement, les moyens de réglage angulaire comprennent au moins deux oreillettes s'étendant radialement sur la périphérie de l'armature externe, et comprenant chacune un trou oblong.

Dans une variante de l'invention, les moyens de réglage angulaire comprennent au moins deux trous, l'un des trous correspondant à un trou du bras longitudinal oscillant pour une position angulaire donnée du bras longitudinal oscillant par rapport à l'axe de rotation Y, l'autre trou correspondant à un autre trou du bras longitudinal oscillant pour une autre position angulaire donnée du bras longitudinal oscillant par rapport à l'axe de rotation Y.

Préférentiellement, les moyens de réglage angulaire comprennent au moins deux oreillettes s'étendant radialement à partir de la périphérie de l'armature externe, et comprenant chacune au moins les deux trous.

Les figures ci-après illustrent de manière non limitative des modes de réalisation de l'invention :
- la figure 1 représente une articulation élastique élastomère selon un premier mode de réalisation de l'invention ;
- la figure 2 représente une articulation élastique élastomère sous contrainte de torsion de stabilisation et bridée avec un dispositif de bridage selon la figure 1 ;
- la figure 3 représente une vue en coupe de l'articulation élastique élastomère bridée de la figure 2 ;
- la figure 4 représente une articulation élastique élastomère sous contrainte de torsion de stabilisation et bridée avec un dispositif de bridage selon un second mode de réalisation selon l'invention ;
- la figure 5 représente l'articulation élastique élastomère selon la figure 4 en vue de côté ;
- la figure 6 représente une articulation élastique élastomère sous contrainte de torsion de stabilisation et bridée avec un dispositif de bridage selon un troisième mode de réalisation de l'invention ;
- la figure 7 représente l'articulation élastique élastomère selon la figure 6 en vue de côté;
- la figure 8 représente une articulation élastique élastomère sous contrainte de torsion de stabilisation et bridée avec un dispositif de bridage selon un quatrième mode de réalisation de l'invention ;
- la figure 9 représente l'articulation élastique élastomère selon la figure 8 en vue de côté;
- la figure 10 représente une articulation élastique élastomère comprenant un dispositif de réglage selon un premier mode de réalisation selon l'invention ;
- la figure 11 représente une articulation élastique élastomère comprenant un dispositif de réglage selon un deuxième mode de réalisation selon l'invention ;
- la figure 12 représente une articulation élastique élastomère comprenant un dispositif de réglage selon un troisième mode de réalisation selon l'invention ;
- la figure 13 représente une vue de dessous d'une articulation élastique élastomère comprenant un dispositif de réglage selon l'une des figures 10 à 12;
- la figure 14 représente un essieu comprenant une articulation élastique élastomère.

Les dessins contiennent, pour l'essentiel, des éléments de caractère certain. Ils pourront donc non seulement servir à mieux faire comprendre la description, mais aussi contribuer à la définition de l'invention, le cas échéant.

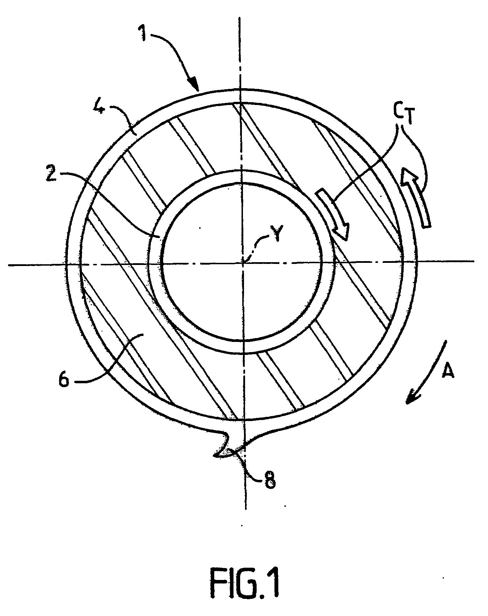

Sur la figure 1, l'articulation élastique élastomère 1 est libre de toute contrainte de torsion. Elle est constituée d'une armature interne 2 tubulaire à section circulaire entourée d'un manchon 6 élastique, par exemple de type caoutchouc, lui-même entouré d'une armature externe 4 tubulaire à section circulaire. L'armature externe 4 comprend une butée 8 saillant vers l'extérieur, par exemple en forme de crochet.

Lors de la mise sous contrainte de torsion C_{T} dite de stabilisation du matériau élastomère, l'armature interne et l'armature externe ont un mouvement relatif de rotation selon l'axe Y (suivant le sens de rotation indiqué par la flèche A et le sens inverse). Avant relâchement de la mise sous torsion, sur l'armature interne 2 est fixé un élément de bridage s'étendant de l'armature interne 2 à l'armature externe 4 et comprenant une partie propre à venir en contact avec la butée 8 de l'armature externe 4.

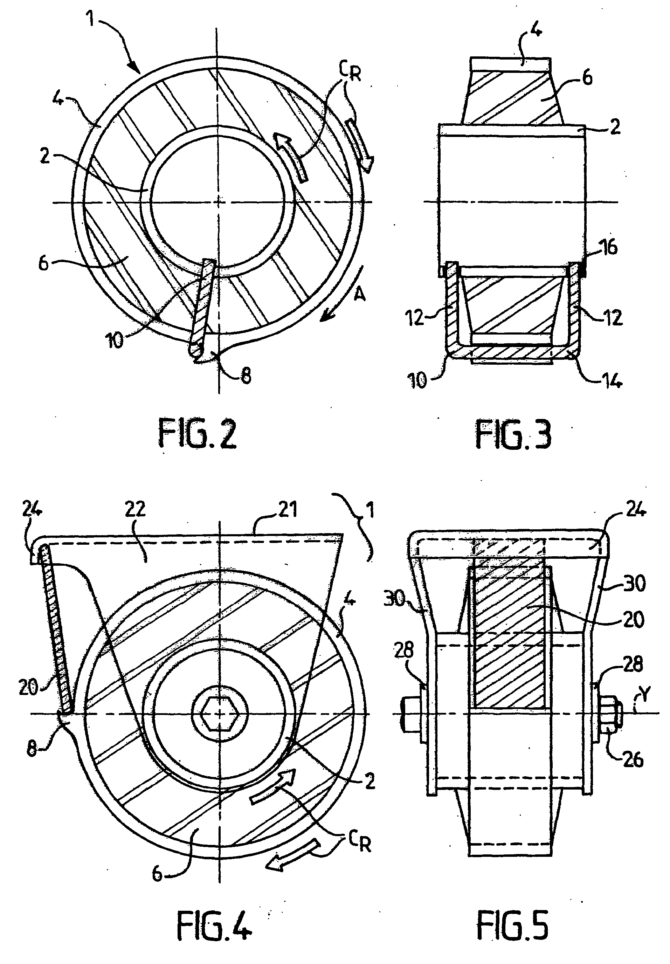

La figure 3 représente plus particulièrement la forme de l'élément de bridage. Cet élément de bridage est constitué d'une tige 10 pliée en forme générale de U comprenant deux montants 12 reliés entre-eux par une traverse 14. Avant relâchement de la mise sous torsion, un montant 12 est fixé à chaque extrémité de l'armature interne débordant axialement du manchon 6 et de l'armature externe 4. Les montants 12 sont fixées à l'armature interne dans des trous 16 par exemple. Dans l'exemple non limitatif de la figure 3, ces montants 12 sont fixés en regard l'un de l'autre et s'étendent radialement jusqu'à dépasser légèrement l'armature externe de manière à ce que la traverse 14 puisse glisser sur la périphérie de l'armature externe 4. Après relâchement de la mise sous torsion, le couple de torsion de rappel C_{R} du matériau élastomère vient placer la traverse 14 et la butée 8 en appui mutuel comme représenté suivant la figure 2.

L'élément de bridage n'est pas limité à une tige pliée selon un profil en U. Ainsi, l'élément de bridage pourrait être réalisé selon une toute autre forme permettant l'appui en butée au niveau de l'armature externe.

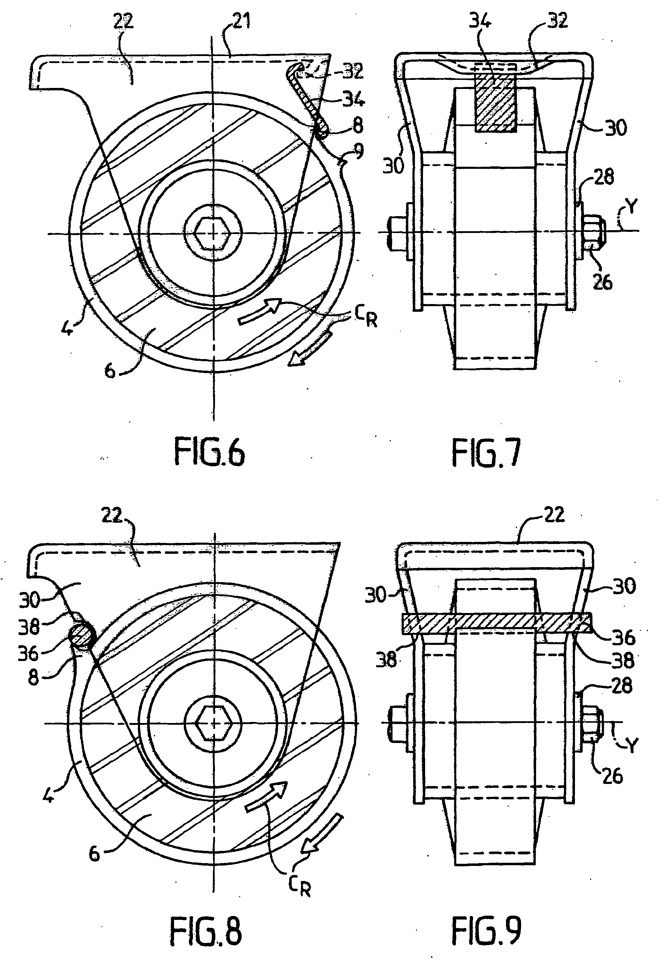

Les figures 4 et 5 présentent un second mode de réalisation selon l'invention d'un dispositif de bridage.

L'articulation élastique élastomère 1 comporte une chape de fixation 22 de l'essieu à la caisse du véhicule et un dispositif de bridage constitué d'un élément de bridage.

La chape de fixation 22 est constituée, comme indiqué sur la figure 5, d'une seule pièce formée d'une plaque pliée en forme générale de U. Cette plaque pliée est constituée de deux parties formant montant 30, venant en contact respectivement avec les deux extrémités axiales de l'armature interne 2. Ces deux parties 30 sont reliées à l'armature interne par un système de fixation, par exemple un système de vis et d'écrou 26 et de rondelles 28. Les deux parties formant montant 30 s'étendent radialement jusqu'à dépasser l'armature externe et sont reliées entre elles par une partie formant traverse 21 parallèle à l'axe de rotation Y de l'articulation. La partie formant traverse 21 est recourbée en direction de l'armature externe sur un bord parallèle à l'axe de rotation Y de manière à former une concavité 24. Cette concavité 24 est destinée à recevoir un côté d'un élément de bridage, par exemple un côté d'une plaque de bridage rectangulaire 20. Le côté opposé de cette plaque de bridage est placé de manière à venir en appui contre la butée 8 de l'armature externe 4 une fois le matériau élastomère mis sous contrainte de tension. L'élément de bridage est soumis à des forces de compression opposées exercées d'une part par la butée 8 et d'autre part par la traverse 21. Ces forces de compression résultent du couple de rappel auquel le matériau élastomère est soumis. Dans un exemple de réalisation de l'invention, la longueur de l'élément de bridage est choisie pour appliquer un couple de tension (ou de rappel) désiré au manchon élastomère.

Les figures 6 et 7 présentent un troisième mode de réalisation selon l'invention.

Dans cette réalisation, le dispositif de bridage est constitué de la chape de fixation 22 et d'un élément de bridage.

La chape de fixation 22 est de même forme générale que la chape de fixation des figures 4 et 5. La chape de fixation 22 des figures 6 et 7 comprend en plus, au niveau de la partie formant traverse 21, un élément formant accroche 32 parallèle à l'axe de rotation Y. Cet élément 32 est réalisé, dans l'exemple de réalisation des figures 6 et 7, par une découpe dans la partie formant traverse 21 puis par un pliage en direction de l'armature externe. D'autre part, l'armature externe 4 comprend une butée 8 selon les modes de réalisations précédents et une came 9 légèrement décalées circonférentiellement.

L'élément de bridage 34 est constitué, comme le montrent les figures 6 et 7, d'une plaque rectangulaire recourbée d'un côté et de l'autre en forme générale de S. Cette plaque est destinée à s'accrocher d'un côté à la butée 8 de l'armature externe 4 et de l'autre côté à l'élément formant accroche 32.

Comme précédemment, cet élément de bridage est mis en place une fois l'articulation élastique élastomère contraint en torsion et sa longueur dépend de la valeur de la contrainte de torsion (ou de rappel) choisie comme précédemment décrit.

Le couple de rappel exercé sur l'articulation élastique élastomère permet de maintenir l'élément de bridage en appui d'un côté contre la butée 8 de l'armature externe et de l'autre côté contre l'élément formant accroche 32 de la plaque 21. En effet, l'élément de bridage est soumis à des forces de traction opposées exercées d'une part par la butée 8 sur un côté recourbé de la plaque et d'autre part par l'élément formant accroche 32 sur l'autre côté recourbé.

Les figures 8 et 9 représentent un quatrième mode de réalisation de l'invention.

Comme précédemment, le dispositif de bridage est constitué de la chape de fixation 22 et d'un élément de bridage 36. La chape de fixation 22 est de même forme générale que la chape de fixation des figures 4 et 5.

Cette fois, l'élément de bridage 36 est une tige cylindrique appelée "rond" de bridage. La chape de fixation comprend une encoche 38 sur un bord de chaque partie formant montant 30, ces deux encoches étant en regard l'une de l'autre parallèlement à l'axe de rotation Y. Ces encoches 38 sont placées radialement légèrement au-delà du rayon de l'armature externe de manière à mettre en butée mutuelle ce rond de bridage 36 et la butée 8 de l'armature externe. En d'autres termes, l'encoche est située de manière à venir en regard de la butée 8 lors de la mise sous contrainte du matériau élastomère.

Ainsi, l'élément de bridage 36 est maintenu dans les encoches 38 des plaques par la poussée de la butée 8 de l'armature externe. En fait, l'élément de bridage 36 est maintenu d'une part dans les encoches 38 et d'autre part contre la butée 8 par le couple de rappel exercé sur le matériau élastomère.

Evidemment, d'autres formes de bridage pourraient être développées selon l'invention. Ainsi, d'autres éléments de bridage pourraient être utilisés.

L'articulation élastique élastomère fait partie d'un dispositif de suspension à monter sur un véhicule. Dans les réalisations des figures 1 à 9, les éléments de bridage tels que la tige de bridage 10, la plaque de bridage 20, la plaque de bridage en forme générale de S 34, le rond de bridage 36 sont des éléments de bridage positionnés après la mise sous contrainte de torsion de stabilisation du matériau élastique élastomère et sont maintenus fixés à l'articulation élastique par le couple de rappel exercé sur le matériau élastomère. Ces éléments de bridage sont libérés automatiquement de leur mise en appui contre la butée 8 de l'armature externe une fois le dispositif de suspension monté sur le véhicule et une fois le véhicule en appui sur le sol par l'intermédiaire des roues. En effet, l'articulation élastique est alors soumise à une contrainte de torsion inverse du couple de rappel. Leur libération ne nécessite aucune opération particulière du moment que le couple de torsion exercé est de même signe que le couple de torsion de stabilisation et est supérieur ou égal en valeur absolue au couple de torsion de stabilisation. De plus, l'articulation élastique est montée sur le dispositif de suspension, lui-même monté sur le véhicule, de telle manière que, sous la contrainte de torsion inverse du couple de rappel, les éléments de bridage sont libérés et récupérés automatiquement par gravité.

Ainsi, du fait de la position du centre de gravité de la tige 10 sensiblement à la verticale en dessous des trous de l'armature interne, la tige de bridage 10 est libérée des trous de l'armature interne et de sa mise en appui contre la butée 8; la plaque de bridage 20 est libérée de la concavité 24 et de sa mise en appui contre la butée 8; le rond de bridage 36 est libéré des encoches 38 et de sa mise en appui contre la butée 8; un côté de la plaque de bridage en forme générale de S 34 est libérée de sa mise en appui contre la butée 8 et l'autre côté reste accrochée à l'élément formant accroche 32. Le côté de la plaque de bridage 34 libéré de sa mise en appui contre la butée 8 décrit le chemin de came proposé par la came 9 lorsque l'armature externe est soumise à une contrainte de torsion inverse du couple de rappel. La poussée exercée par la came sur ce côté de la plaque de bridage permet le décrochage de l'autre côté de la plaque de bridage 34.

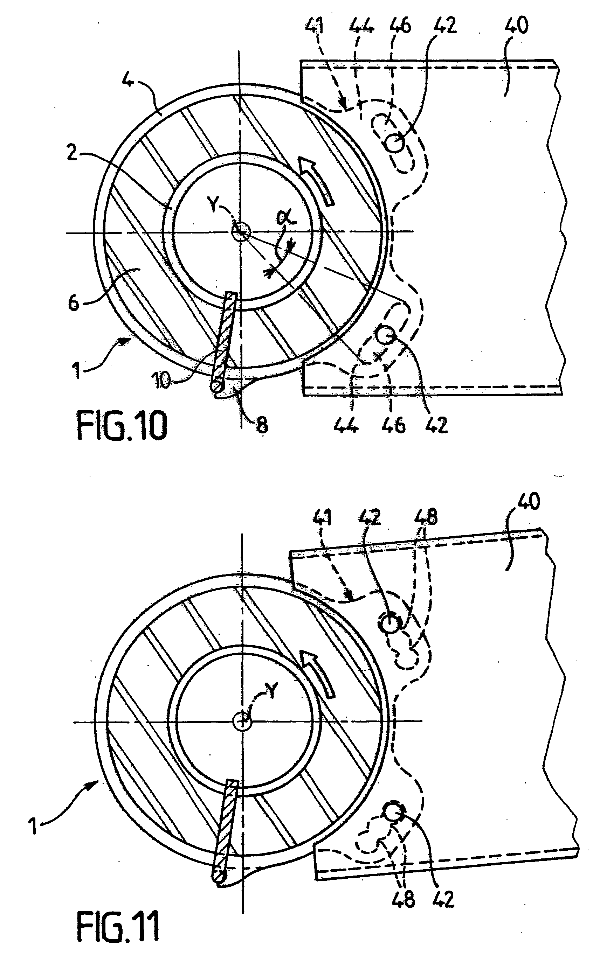

Les figures 10 à 14 proposent un dispositif de réglage en position qui peut être combiné ou non aux modes de réalisation des figures 1 à 9. Dans les exemples non limitatifs des figures 10 à 13, il a été choisi de garder le mode de réalisation de la figure 2 de manière à mettre l'accent sur la complémentarité possible des modes de réalisation des figures 1 à 9 avec les modes de réalisation des figures 10 à 13.

Lorsque l'articulation élastique élastomère a été contrainte en torsion selon des réalisations possibles des figures 1 à 9, le montage de cette articulation élastique sur le reste de l'essieu puis le montage de l'essieu sur la caisse du véhicule d'un côté et sur l'axe d'une roue du véhicule de l'autre ne permet pas d'être assuré de la hauteur effective de la caisse du véhicule et/ou de son horizontalité.

L'invention propose notamment un dispositif de réglage au niveau de l'articulation élastique.

Lors de l'application d'une contrainte de torsion sur l'articulation élastique élastomère comme présenté selon les figures 1 à 9, une courbe de raideur de l'articulation élastique est relevée. Cette courbe de raideur associée à la masse réelle du véhicule permet de régler la position de l'articulation élastique par rapport aux autres éléments de l'essieu grâce au dispositif de réglage selon l'invention. La hauteur de la caisse de véhicule peut ainsi être choisie avant le montage de l'essieu sur le véhicule et être obtenue par pré-réglage avant montage de l'essieu sur le véhicule. Tous les véhicules peuvent ainsi avoir la même hauteur effective, quelles que soient la masse et les articulations qu'ils comprennent.

D'autre part, ce dispositif de réglage permet également un réglage a posteriori si une erreur est commise ou si la véhicule a une masse non conforme à la masse prévue.

Selon la figure 10, l'articulation élastique élastomère comprend une armature interne 2, un manchon 6 matériau élastomère et une armature externe 4 déjà décrits en relation avec les figures 1 à 3. En outre, l'armature externe 4 comprend un dispositif de réglage angulaire 41 destiné à relier l'articulation élastique 1 à un élément de support de roue du véhicule, cet élément étant appelé par la suite "bras longitudinal oscillant".

Le bras longitudinal oscillant, pouvant être un tube à section rectangulaire, comprend deux côtés parallèles entre eux et usinés en arc de cercle de manière à ce que l'armature externe vienne s'emboîter dans ces arcs de cercle. De plus, au moins un côté comprend deux trous 42 positionnés au-delà de l'arc de cercle.

Le dispositif de réglage angulaire 41 comprend deux oreillettes 44 s'étendant radialement sur la périphérie de l'armature externe. Ces deux oreillettes 44 se déduisent l'une de l'autre par une rotation autour de l'axe Y. Ces deux oreillettes 44 comportent chacune un trou oblong 46 en forme d'arc de cercle. Ainsi, le bras longitudinal oscillant est tout d'abord relié à l'articulation élastique en introduisant des vis, passant dans les trous 42, dans les trous oblongs 46. Chaque vis peut décrire le chemin délimité par le trou oblong correspondant. Le bras longitudinal oscillant peut ainsi tourner autour de l'axe de rotation Y d'un angle α défini par la longueur des trous oblongs. Une fois le bras longitudinal oscillant réglé en rotation, celui-ci est fixé à l'articulation élastique 1 par des écrous coopérant avec les vis.

Un autre mode de réalisation du dispositif de réglage angulaire est présenté sur la figure 11. Le bras longitudinal oscillant est de la forme générale décrite selon la figure 10.

Ainsi, les trous oblongs en forme d'arc de cercle du dispositif de réglage angulaire de la figure 10 sont remplacés par des trous oblongs à crans 48 disposés en arc de cercle. Dans l'exemple de la figure 11, deux crans permettent de délimiter trois positions pour le trou de fixation 42 du bras longitudinal oscillant 40.

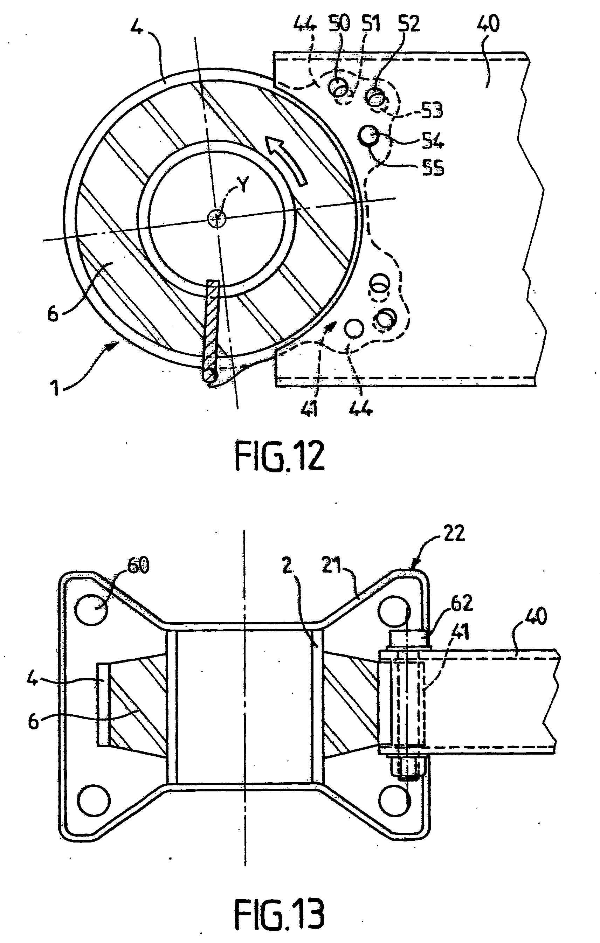

Dans un troisième mode de réalisation selon la figure 12, le dispositif de réglage angulaire comprend deux oreillettes 44 percées chacune d'un ensemble de trous, par exemple trois trous d'oreillette 51, 53, 55 en quinconce. D'autre part, le bras longitudinal oscillant 40 est de la forme générale décrite selon la figure 10. Les deux trous de bras précédemment décrits sont remplacés par deux jeux de trous de bras constitués chacun d'un certain nombre de trous, dans l'exemple trois trous de bras 50, 52, 54 en quinconce. Lorsque le bras longitudinal oscillant est positionné contre l'armature externe tout en restant mobile en rotation par rapport à l'axe de rotation Y, un trou de chaque oreillette 44 est mis en correspondance avec un trou du jeu de trous de bras correspondant, par exemple le trou 55 s'adaptant au trou 54. Les autres trous d'oreillette ne se superposent pas aux trous de bras dans cette position angulaire donnée du bras longitudinal oscillant par rapport à l'axe de rotation Y. Afin de mettre en correspondance un autre trou de chaque oreillette avec un autre trou du jeu de trou de bras correspondant, la position du bras longitudinal oscillant doit être modifiée en rotation selon l'axe Y. Il en va de même jusqu'au dernier trou de chaque oreillette à mettre en correspondance avec le dernier trou du jeu de trous de bras correspondant. Entre un premier trou du jeu de trou de bras mis en correspondance avec un premier trou du jeu de trou d'oreillette et un dernier trou du jeu de trou de bras mis en correspondance avec un dernier trou du jeu de trou d'oreillette, le bras longitudinal oscillant pivote d'un angle α centré sur l'axe Y. Ce système est dit à trous décalés.

La figure 13 représente l'articulation élastique 1 fixée selon l'invention au bras longitudinal oscillant 40 par un système de vis et écrou 62 à travers un trou du dispositif de réglage angulaire 41 tel que ceux des figures 10 à 12. D'autre part, l'articulation élastique 1 est fixée à la chape de fixation 22 comportant quatre trous 60 sur sa plaque supérieure 21 destinés à permettre le passage de moyens de fixation à la caisse du véhicule.

Le dispositif de réglage angulaire n'est pas limité aux différent modes de réalisation présentés, il pourrait être conçu selon des variantes de réalisation.

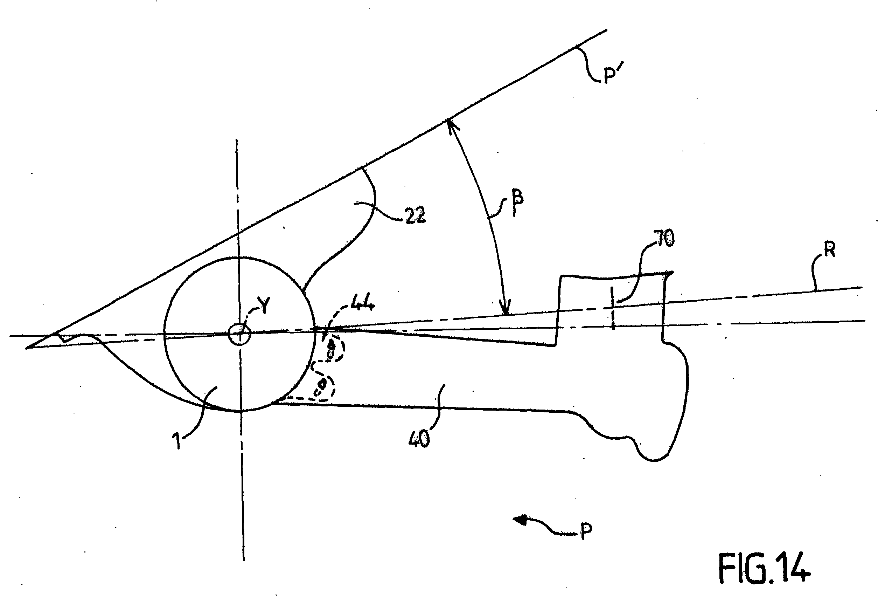

La figure 14 se situe dans un plan P (plan de la planche de dessin) perpendiculaire à l'axe Y. Le plan P' définit le plan de contact entre la caisse du véhicule et la chape de fixation 22, le plan P' étant parallèle à l'axe Y. Le dispositif de réglage angulaire permet de régler l'angle β situé dans le plan P et défini par le dièdre formé par le plan P' et par le plan R passant par l'axe Y et l'axe de la roue 70. Cet angle β, obtenu lors de l'assemblage des éléments de l'essieu avant montage sur le véhicule, peut être choisi de manière à ce que, une fois effectué le montage de l'ensemble 22, 1 et 40 sur le véhicule, cet angle soit proche d'une valeur telle que la caisse du véhicule ait une hauteur définie. Cet angle peut notamment être choisi grâce à la connaissance de données concernant la raideur de l'articulation élastique associée a la masse réelle du véhicule. Ces données peuvent se présenter sous la forme d'une courbe de raideur de l'articulation élastique en fonction de la masse de véhicule. Dans le cas d'une opération préalable de parachèvement de l'articulation élastique (ou mise sous torsion), cette courbe peut être obtenue lors de cette opération par tests à différentes valeurs de couple de torsion.

La hauteur de la caisse de véhicule peut ainsi être choisie avant le montage de l'ensemble 22, 1 et 40 sur le véhicule et être obtenue par pré-réglage avant montage de l'essieu sur le véhicule.

D'autre part, ce réglage est également utilisable après montage de l'ensemble 22, 1 et 40 sur la caisse du véhicule. Ce réglage est appelé "réglage post-montage".

L'invention n'est pas limité aux seules réalisations décrites. L'homme du métier comprendra aisément que l'invention peut s'étendre à beaucoup d'autres variantes.

Ainsi, le dispositif de réglage angulaire sur l'articulation élastique est décrit en correspondance avec une articulation élastique ayant subi une mise sous contrainte comme décrit selon les figures 1 à 9. Toutefois, ce dispositif de réglage angulaire sur l'articulation élastique forme en lui-même une invention pouvant être mise en oeuvre séparément.

## Revendications

1. Articulation élastique élastomère adaptée pour servir de pièce ressort d'un dispositif de suspension de véhicule, ladite articulation (1) définissant un axe de rotation Y et comprenant une armature interne (2) et une armature externe (4) reliées par un matériau élastique élastomère destiné à être soumis à une contrainte de torsion autour de l'axe Y avant montage sur le véhicule, **caractérisé en ce qu'**elle comprend un dispositif de bridage entre l'armature externe (4) et l'armature interne (2) et **en ce que** l'armature externe (4) comprend une butée (8) saillant vers l'extérieur, le dispositif de bridage et la butée (8) étant propres, après la soumission du matériau élastique élastomère à une contrainte de torsion dite de stabilisation, à venir en appui mutuel sous la contrainte de rappel, de manière à maintenir la contrainte de torsion de stabilisation sur le matériau élastique élastomère.

2. Articulation élastique élastomère selon la revendication 1, **caractérisé en ce que** le dispositif de bridage comprend un élément de bridage d'un côté fixé à l'armature interne et de l'autre côté libre et propre à venir en appui contre la butée sous la contrainte de rappel.

3. Articulation élastique élastomère selon l'une des revendications 1 et 2, **caractérisé en ce que** le dispositif de bridage comprend un élément de bridage selon un profil en U comprenant deux montants (12) fixés chacun à l'armature interne (2) et une traverse (14) reliant les deux montants propre à venir en appui contre la butée (8) sous la contrainte de rappel.

4. Articulation élastique élastomère selon la revendication 1, **caractérisé en ce qu'**elle comprend, fixée à l'armature interne, une chape de fixation (22) de l'articulation élastique élastomère au véhicule comportant, sur un côté parallèle à l'axe de rotation Y, une concavité (24) dirigée vers l'armature externe (4), et **en ce que** le dispositif de bridage entre l'armature externe (4) et l'armature interne (2) comprend une plaque de bridage (20) propre à venir en appui d'un côté contre la butée (8) de l'armature externe et de l'autre côté dans la concavité (24) de la chape de fixation sous la contrainte de rappel.

5. Articulation élastique élastomère selon la revendication 1, **caractérisé en ce qu'**elle comprend, fixée à l'armature interne, une chape de fixation (22) de l'articulation élastique élastomère au véhicule comportant, sur un côté parallèle à l'axe de rotation Y, une élément formant accroche (32) dirigé vers l'armature externe, et **en ce que** le dispositif de bridage entre l'armature externe (4) et l'armature interne (2) comprend une plaque de bridage en forme générale de S (34) propre à venir en appui d'un côté contre la butée (8) de l'armature externe et de l'autre côté contre l'élément formant accroche (32) sous la contrainte de rappel.

6. Articulation élastique élastomère selon la revendication 1, **caractérisé en ce qu'**elle comprend une chape de fixation (22) de l'articulation élastique élastomère au véhicule comportant une encoche (38) sur au moins un de ses bords perpendiculaire à l'axe Y, l'encoche (38) étant placée de manière à venir en regard de la butée (8) de l'armature externe lors de la mise sous contrainte du matériau élastomère, et **en ce que** le dispositif de bridage entre l'armature externe (4) et l'armature interne (2) comprend un élément propre à s'engager dans l'encoche (38) et à y être maintenu sous la poussée de la butée (8) provoquée par la contrainte de rappel.

7. Articulation élastique élastomère selon l'une des revendications précédentes, **caractérisé en ce que** le dispositif de bridage et l'armature externe sont agencés pour permettre la libération automatique du dipositif de bridage lorsque l'articulation élastique est soumise, après montage sur le véhicule, à une contrainte de torsion au moins égal en valeur absolue et en signe à la contrainte de torsion de stabilisation.

8. Articulation élastique élastomère selon l'une des revendications précédentes, **caractérisé en ce que** l'articulation élastique est destinée à être montée sur le véhicule de manière à ce que la libération automatique du dispositif de bridage s'opère par gravité.

9. Articulation élastique élastomère selon l'une des revendications 7 et 8 prise en combinaison avec la revendication 3, **caractérisé en ce que** les montants (12) de l'élément de bridage (10) sont fixés à l'armature interne par coopération dans des trous (16) de l'armature interne et **en ce que** l'articulation élastique est destinée à être montée sur le véhicule de manière à ce que le centre de gravité de l'élément de bridage (10) soit situé sensiblement à la verticale des trous (16) sous ces trous.

10. Articulation élastique élastomère selon l'une des revendications 7 et 8 prise en combinaison avec la revendication 5, **caractérisé en ce que** l'armature externe comprend une came (9) décalée circonférentiellement par rapport à la butée (8) pour que la libération automatique de la plaque de bridage (34) soit assurée par la poussée de la came sur l'extrémité de la plaque de bridage initialement en appui contre la butée (8).

11. Articulation élastique élastomère selon l'une des revendications 1 à 10, ladite articulation (1) étant adaptée pour être fixée d'une part, par l'intermédiaire de l'armature externe (4), à un bras longitudinal oscillant (40) relié à l'axe d'une roue de véhicule et d'autre part, par l'intermédiaire de l'armature interne (2), à la caisse du véhicule et pour opposer une force de rappel en torsion lors de la soumission à une contrainte de torsion de stabilisation selon l'axe Y, **caractérisé en ce que** l'armature externe (4) comprend des moyens de réglage angulaire (41) de l'articulation par rapport au bras longitudinal oscillant.

12. Articulation élastique élastomère selon la revendication 11, **caractérisée en ce que** les moyens de réglage angulaire (41) s'étendent radialement à partir de la périphérie de l'armature externe (4).

13. Articulation élastique élastomère selon l'une des revendications 11 et 12, **caractérisée en ce que** les moyens de réglage angulaire (41) comprennent au moins un trou oblong (46) en forme d'arc de cercle centré sur l'axe Y propre à être mis en vis à vis avec un trou du bras longitudinal oscillant pour fixer l'articulation au bras longitudinal oscillant.

14. Articulation élastique élastomère selon l'une des revendications 11 à 13, **caractérisée en ce que** les moyens de réglage angulaire comprennent au moins un trou oblong à crans (48) en forme d'arc de cercle centré sur l'axe Y.

15. Articulation élastique élastomère selon l'une des revendications 11 à 14, **caractérisée en ce que** les moyens de réglage angulaire (41) comprennent au moins deux oreillettes (44) s'étendant radialement sur la périphérie de l'armature externe (4), et comprenant chacune un trou oblong (46, 48).

16. Articulation élastique élastomère selon l'une des revendications 11 et 12, **caractérisée en ce que** les moyens de réglage angulaire (41) comprennent au moins deux trous (51, 53), l'un des trous correspondant à un trou du bras longitudinal oscillant pour une position angulaire donnée du bras longitudinal oscillant par rapport à l'axe de rotation Y, l'autre trou correspondant à un autre trou du bras longitudinal oscillant pour une autre position angulaire donnée du bras longitudinal oscillant par rapport à l'axe de rotation Y.

17. Articulation élastique élastomère selon la revendication 16, **caractérisée en ce que** les moyens de réglage angulaire (41) comprennent au moins deux oreillettes (44) s'étendant radialement à partir de la périphérie de l'armature externe (4), et comprenant chacune au moins les deux trous (51, 53).

## Patentansprüche

1. Elastisches elastomeres Gelenk, das als Federelement einer Fahrzeugaufhängungsvorrichtung dient, wobei das Gelenk (1) eine Drehachse Y definiert und eine innere Armatur (2) und eine äußere Armatur (4) aufweist, die durch ein elastisches elastomeres Material verbunden sind, das dazu dient, einer Torsionsbelastung um die Achse Y vor der Montage am Fahrzeug unterworfen zu werden, **dadurch gekennzeichnet, dass** sie eine Klemmvorrichtung zwischen der äußeren Armatur (4) und der inneren Armatur (2) aufweist, und dass die äußere Armatur (4) einen Anschlag (8) aufweist, der nach außen vorspringt, wobei die Klemmvorrichtung und der Anschlag (8) in der Lage sind, nachdem das elastische elastomere Material einer Torsionsbelastung genannt der Stabilisation, unterworfen wird, in gegenseitige Anlage unter dem Rückstellzwang zu kommen, derart, dass die Torsionsbelastung der Stabilisation auf das elastische elastomere Material beibehalten wird.

2. Elastisches elastomeres Gelenk nach Anspruch 1, **dadurch gekennzeichnet, dass** die Klemmvorrichtung ein Klemmelement aufweist, das auf der einen Seite an der inneren Armatur befestigt ist, und auf der anderen Seite frei ist, und in der Lage ist, in Anlage gegen den Anschlag unter dem Rückstellzwang zum kommen.

3. Elastisches elastomeres Gelenk nach Anspruch 1 oder 2, **dadurch gekennzeichnet, dass** die Klemmvorrichtung ein Klemmelement gemäß einem U-Profil aufweist, mit zwei Schenkeln (12), die jeweils an der inneren Armatur (2) befestigt sind, und eine Traverse (14), die die beiden Schenkel verbindet, in der Lage ist, in Anschlag gegen den Anschlag (8) unter de m Rückstellzwang zu kommen.

4. Elastisches elastomeres Gelenk nach Anspruch 1, **dadurch gekennzeichnet, dass** es, befestigt an der inneren Armatur, ein Befestigungsgelenk (22) des elastischen elastomeren Gelenks am Fahrzeug aufweist, das auf einer Seite parallel zur Drehachse Y eine zur äußeren Armatur (4) gerichtete Vertiefung (24) aufweist, und dass die Klemmvorrichtung zwischen der äußeren Armatur (4) und der inneren Armatur (2) eine Klemmplatte (20) aufweist, die in der Lage ist, in Anlage auf einer Seite gegen den Anschlag (8) der äußeren Armatur und auf der anderen Seite in die Vertiefung (24) des Befestigungsgelenks unter dem Rückstellzwang zu kommen.

5. Elastisches elastomeres Gelenk nach Anspruch 1, **dadurch gekennzeichnet, dass** es, befestigt an der inneren Armatur, ein Befestigungsgelenk (22) des elastischen elastomeren Gelenks am Fahrzeug aufweist, welches auf einer Seite parallel zur Drehachse Y ein einen Haken bildendes Element (32), das zu der äußeren Armatur gerichtet ist, aufweist, und dass die Klemmvorrichtung zwischen der äußeren Armatur (4) und der inneren Armatur (2) eine Klemmplatte von allgemeiner S-Form (34) aufweist, die in der Lage ist, in Anlage einerseits gegen den Anschlag (8) der äußeren Armatur und andererseits gegen das einen Haken bildenden Element (32) unter dem Rückstellzwang zu kommen.

6. Elastisches elastomeres Gelenk nach Anspruch 1, **dadurch gekennzeichnet, dass** es ein Befestigungsgelenk (22) des elastischen elastomeren Gelenks am Fahrzeug aufweist, das an wenigstens einem seiner Ränder, senkrecht zur Achse Y, eine Kerbe (38) aufweist, wobei die Kerbe (38) so angeordnet ist, dass sie gegenüber dem Anschlag (8) der äußeren Armatur beim unter Zwang setzen des elastomeren Materials zu liegen kommt, und dass die Klemmvorrichtung zwischen der äußeren Armatur (4) und der inneren Armatur (2) ein Element aufweist, das in der Lage ist, in die Kerbe (38) einzugreifen und dort gehalten zu werden unter dem Druck des Anschlags (8), der von dem Rückstellzwang hervorgerufen wird.

7. Elastisches elastomeres Gelenk nach einem der vorhergehenden Ansprüche, **dadurch gekennzeichnet, dass** die Klemmvorrichtung und die äußere Armatur so angelenkt sind, dass sie die automatische Freigabe der Klemmvorrichtung erlauben, wenn das elastische Gelenk nach Montage am Fahrzeug einer Torsionsbelastung unterworfen wird, die wenigstens gleich einem absoluten Wert und dem Vorzeichen nach zu der Torsionsbelastung der Stabilisation ist.

8. Elastische elastomeres Gelenk nach einem der vorhergehenden Ansprüche, **dadurch gekennzeichnet, dass** das elastische Gelenk dazu dient, an dem Fahrzeug derart angebracht zu werden, so dass die automatische Freisetzung der Klemmvorrichtung durch Schwerkraft erfolgt.

9. Elastisches elastomeres Gelenk nach einem der Ansprüche 7 oder 8 in Kombination mit dem Anspruch 3, **dadurch gekennzeichnet, dass** die Schenkel (12) des Klemmelements (10) an der inneren Armatur durch Zusammenwirken in Löchern (16) der inneren Armatur befestigt sind, und dass das elastische Gelenk dazu dient, an dem Fahrzeug angebracht zu werden, derart, dass der Schwerpunkt des Klemmelements (10) sich im Wesentlichen auf der Vertikalen der Löcher (16) unter diesen Löchern befindet.

10. Elastisches elastomeres Gelenk nach einem der Ansprüche 7 oder 8 in Kombination mit dem Anspruch 5, **dadurch gekennzeichnet, dass** die äußere Armatur einen Nocken (9) aufweist, der am Umfang bezüglich des Anschlags (8) versetzt angeordnet ist, damit die automatische Freigabe der Klemmplatte (34) durch dem Druck des Nockens auf das Ende der Klemmplatte ausgangs des Anschlags gegen den Anschlag (8) sichergestellt wird.

11. Elastisches elastomeres Gelenk nach einem der Ansprüche 1 bis 10, wobei das Gelenk (1) in der Lage ist, einerseits mittels der äußeren Armatur (4) an einem oszillierenden Längsarm (40), der mit der Achse eines Fahrzeugrades verbunden ist, und andererseits, mittels der inneren Armatur (2) mit dem Fahrzeuggehäuse befestigt zu sein und in der Lage ist, gegen eine Torsionsrückstellkraft beim Aufbringen einer Torsionsbelastung der Stabilisation entlang der Achse Y entgegen zu wirken, **dadurch gekennzeichnet, dass** die äußere Armatur (4) Winkeleinstellungseinrichtungen (41) des Gelenks bezüglich des oszillierenden Längsarms aufweist.

12. Elastisches elastomeres Gelenk nach Anspruch 11, **dadurch gekennzeichnet, dass** die Winkeleinstelleinrichtungen (41) sich radial ausgehend vom Umfang der äußeren Armatur (4) erstrecken.

13. Elastisches elastomeres Gelenk nach Anspruch 11 oder 12, **dadurch gekennzeichnet, dass** die Winkeleinstelleinrichtungen (41) wenigstens ein Langloch (46) in Form eines Kreisbogens, der auf die Achse Y zentriert ist, aufweisen, das in der Lage ist, gegenüber einem Loch des oszillierenden Längsarmes gesetzt zu werden, um das Gelenk am oszillierenden Längsarm zu befestigen.

14. Elastisches elastomeres Gelenk nach einem der Ansprüche 11 bis 13, **dadurch gekennzeichnet, dass** die Winkeleinstelleinrichtungen wenigstens ein Langloch mit Rasten (48) in Form eines Kreisbogens aufweisen, der auf der Achse Y zentriert ist.

15. Elastisches elastomeres Gelenk nach einem der Ansprüche 11 bis 14, **dadurch gekennzeichnet, dass** die Winkeleinstelleinrichtungen (41) wenigstens zwei Klappen (44) aufweisen, die sich radial an dem Umfang der äußeren Armatur (4) erstrecken und jeweils ein Langloch (46, 48) aufweist.

16. Elastisches elastomeres Gelenk nach Anspruch 11 oder 12, **dadurch gekennzeichnet, dass** die Winkeleinstelleinrichtungen (41) wenigstens zwei Löcher (51, 53) aufweisen, wobei eines der Löcher einem Loch des oszillierenden Längsarms für eine vorgegebene Winkelposition des oszillierenden Längsarms bezüglich der Drehachse Y entspricht, wobei das andere Loch einem anderen Loch des oszillierenden Längsarms für eine andere vorgegebene Winkelposition des oszillierenden Längsarms bezüglich der Drehachse Y entspricht.

17. Elastisches elastomeres Gelenk nach Anspruch 16, **dadurch gekennzeichnet, dass** die Winkeleinstelleinrichtungen (41) wenigstens zwei Klappen (44) aufweisen, die sich radial ausgehend vom Umfang der äußeren Armatur (4) erstrecken und jeweils wenigstens die beiden Löcher (51, 53) aufweisen.

## Claims

1. Elastic elastomer joint adapted to act as a spring element of a vehicle suspension device, the joint (1) defining an axis of rotation Y and comprising an inner reinforcement (2) and an outer reinforcement (4) connected by an elastic elastomer material intended to be subjected to a torsional stress about the axis Y before assembly in a vehicle, **characterised in that** it comprises a clamping device between the outer reinforcement (4) and the inner reinforcement (2) and **in that** the outer reinforcement (4) comprises a stop (8) projecting outward, the clamping device and the stop (8) being capable, after the elastic elastomer material has been subject to a torsional stress said to be stabilising, of coming into mutual abutment under the restoring force, so as to maintain the stabilising torsional stress on the elastic elastomer material.

2. Elastic elastomer joint according to claim 1, **characterised in that** the clamping device comprises a clamping element on one side being fixed to the inner reinforcement and on the other side being free and capable of coming into abutment with the stop under the restoring force.

3. Elastic elastomer joint according to either of claims 1 or 2, **characterised in that** the clamping device comprises a clamping element having a U-shaped profile comprising two struts (12) each fixed to the inner reinforcement (2) and a cross-piece (14) connecting the two struts and being capable of coming into abutment with the stop (8) under the restoring force.

4. Elastic elastomer joint according to claim 1, **characterised in that** it comprises, fixed to the inner reinforcement, a shackle (22) for fixing the elastic elastomer joint to the vehicle and comprising, on one side parallel to the axis of rotation Y, a concavity (24) oriented towards the outer reinforcement (4), and **in that** the clamping device between the outer reinforcement (4) and the inner reinforcement (2) comprises a clamping plate (20) capable of coming into abutment on the one hand with the stop (8) of the outer reinforcement and on the other hand with the concavity (24) of the fixing shackle under the restoring force.

5. Elastic elastomer joint according to claim 1, **characterised in that** it comprises, fixed to the inner reinforcement, a shackle (22) for fixing the elastic elastomer joint to the vehicle and comprising, on one side parallel to the axis of rotation Y, an element forming a hook (32) oriented towards the outer reinforcement, and **in that** the clamping device between the outer reinforcement (4) and the inner reinforcement (2) comprises a clamping plate having a general S-shape (34) capable of coming into abutment on the one hand with the stop (8) of the outer reinforcement and on the other hand with the element forming a hook (32) under the restoring force.

6. Elastic elastomer joint according to claim 1, **characterised in that** it comprises a shackle (22) for fixing the elastic elastomer joint to the vehicle, comprising a recess (38) on at least one of its edges perpendicular to the axis Y, the recess (38) being located so as to come opposite the stop (8) of the outer reinforcement when the elastomer material is subjected to a force, and **in that** the clamping device between the outer reinforcement (4) and the inner reinforcement (2) comprises an element capable of engaging in the recess (38) and of being held there under the thrust of the stop (8) caused by the restoring force.

7. Elastic elastomer joint according to one of the preceding claims, **characterised in that** the clamping device and the outer reinforcement are contrived to allow automatic freeing of the clamping device when the elastic joint is subjected, after assembly on the vehicle, to a torsional stress at least equal in absolute value and in sign to the stabilising torsional stress.

8. Elastic elastomer joint according to one of the preceding claims, **characterised in that** the elastic joint is intended to be mounted on the vehicle so that automatic freeing of the clamping device is operated by gravity.

9. Elastic elastomer joint according to either of claims 7 or 8, in combination with claim 3, **characterised in that** the struts (12) of the clamping element (10) are fixed to the inner reinforcement by cooperating with holes (16) in the inner reinforcement and **in that** the elastic joint is intended to be mounted on the vehicle so that the centre of gravity of the clamping element (10) is located substantially vertically with respect to the holes (16) below these holes.

10. Elastic elastomer joint according to either of claims 7 or 8, in combination with claim 5, **characterised in that** the outer reinforcement comprises a cam (9) staggered circumferentially relative to the stop (8) so that automatic freeing the clamping plate (34) is effected by the thrust of the cam on the end of the clamping plate initially bearing on the stop (8).

11. Elastic elastomer joint according to one of claims 1 to 10, the said joint (1) being adapted to be fixed on the one hand via the outer reinforcement (4) to a longitudinal oscillating arm (40) connected to the axle of a wheel of the vehicle and on the other hand via the inner reinforcement (2) to the body of the vehicle and in order to oppose a restoring torsional force when subjected to a stabilising torsional stress about the axis Y, **characterised in that** the outer reinforcement (4) has means of angular adjustment (41) of the joint relative to the longitudinal oscillating arm.

12. Elastic elastomer joint according to claim 11, **characterised in that** the angular adjustment means (41) extend radially from the periphery of the outer reinforcement (4).

13. Elastic elastomer joint according to either of claims 11 or 12, **characterised in that** the angular adjustment means (41) comprise at least one oblong hole (46) in the form of an arc of a circle centred on the axis Y capable of being placed opposite a hole in the longitudinal oscillating arm in order to fix the joint to the longitudinal oscillating arm.

14. Elastic elastomer joint according to one of claims 11 to 13, **characterised in that** the angular adjustment means comprise at least one oblong hole with notches (48) in the shape of the arc of a circle centred on the axis Y.

15. Elastic elastomer joint according to one of claims 11 to 14, **characterised in that** the angular adjustment means (41) comprise at least two lugs (44) extending radially over the periphery of the outer reinforcement (4) and each comprising an oblong hole (46, 48).

16. Elastic elastomer joint according to either of claims 11 or 12, **characterised in that** the angular adjustment means (41) comprise at least two holes (51, 53), one of which corresponds to a hole in the longitudinal oscillating arm for a specified angular position of the longitudinal oscillating arm relative to the axis of rotation Y, the other hole corresponding to another hole in the longitudinal oscillating arm for another specified angular position of the longitudinal oscillating arm relative to the axis of rotation Y.

17. Elastic elastomer joint according to claim 16, **characterised in that** the angular adjustment means (41) comprise at least two lugs (44) extending radially from the periphery of the outer reinforcement (4) and each comprising at least the two holes (51, 53).
